# EUROPÄISCHE PATENTSCHRIFT

(11) **EP 4 157 908 B1**
(45) Veröffentlichungstag und Bekanntmachung des Hinweises auf die Patenterteilung: **01.05.2024**
(21) Anmeldenummer: 21727474.5
(22) Anmeldetag: 21.05.2021
(51) Int. Cl.: C08G 18/02, C08G 18/76, C08G 18/79

(54) **NEUE PHTHALATFREIE ISOCYANURAT-ZUSAMMENSETZUNG UND DEREN VERWENDUNG**
NOVEL PHTHALATE-FREE ISOCYANURATE COMPOSITION AND USE OF SAME
NOUVELLE COMPOSITION D'ISOCYANURATE SANS PHTALATE ET SON UTILISATION

(30) Priorität: 28.05.2020 EP 20176994
(43) Veröffentlichungstag der Anmeldung: 05.04.2023
(73) Patentinhaber: LANXESS Deutschland GmbH, 50569 Köln (DE)
(72) Erfinder: AUGUSTIN, Thomas, 51427 Refrath (DE); LOCHRIE, Ian, Hapton, Burnley Lancashire BB11 5QY (GB)
(86) Internationale Anmeldenummer: PCT/EP2021/063666
(87) Internationale Veröffentlichungsnummer: WO 2021/239621

(56) Entgegenhaltungen:
- WO-A1-2005/070984

## Beschreibung

Die vorliegende Erfindung betrifft das technische Gebiet von Haftvermittlern, insbesondere Haftvermittlern für Beschichtungsmittel auf Basis von weichgemachtem PVC und stellt phthalatfreie, monomerenarme, niedrigviskose und gering flüchtige Zusammensetzungen zur Verfügung, die sich vorzüglich als Haftvermittler eignen.

### Stand der Technik

Es ist bekannt, die Haftfähigkeit von weichgemachtem PVC auf Substraten dadurch zu verbessern, dass dem weichgemachten PVC ein isocyanatgruppenhaltiger Haftvermittler zugesetzt wird. Eine derart verbesserte Haftfähigkeit ist beispielsweise wichtig, wenn mit einem PVC-Belag versehene synthetische Textilstoffe hergestellt werden sollen. Als Haftvermittler werden bevorzugt isocyanatgruppenhaltige Isocyanurate eingesetzt, die sich durch Oligomerisierung, insbesondere Trimerisation, aus Diisocyanaten herstellen lassen. Hierfür werden normalerweise als Diisocyanate die kommerziell gut verfügbaren Mischungen der isomeren Diisocyanatotoluole (TDI), bestehend hauptsächlich aus 2,4-Diisocyanatotoluol (2,4-TDI) und 2,6-Diisocyanatotoluol (2,6-TDI) eingesetzt. Diese lassen sich auf einfache Weise nahezu vollständig in isocyanatgruppenhaltige Isocyanurate umsetzen. Der nahezu vollständige Umsatz ist aus Gründen der Arbeits- und Produktsicherheit und der EU Regulierung erforderlich, weshalb man den Restgehalt an Diisocyanaten in der Haftvermittler-Zusammensetzung unter 0,5 Gew.-% hält. Weniger geeignet sind die ebenfalls gut verfügbaren Diisocyanatodiphenylmethane (MDI), die sich im Vergleich mit TDI schlechter trimerisieren lassen und so zu einem unerwünscht hohen Restgehalt an Diisocyanaten führen können. Darüber hinaus zeigen isocyanatgruppenhaltige Isocyanurate auf Basis von MDI eine schlechte Löslichkeit und neigen zur Kristallisation.

### Isocyanatgruppenhaltige Isocyanurate

Isocyanatgruppenhaltige Isocyanurate lassen sich als Haftvermittler vor allem dann einfach handhaben, wenn sie in Form einer Lösung in einem Weichmacher angewendet werden. Die Herstellung der isocyanatgruppenhaltigen Isocyanurate aus TDI erfolgt vorzugsweise bereits in dem als Lösungsmittel verwendeten Weichmacher. Derartige Haftvermittler und weichmacherhaltige Haftvermittler-Zusammensetzungen, ihre Herstellung und ihre Anwendung sind beispielsweise in DE2419016 A1 (GB1455701 A) oder in der WO2011/095569 beschrieben.

### Weichmacher und weichgemachtes PVC

Weichmacher im Sinne der vorliegenden Erfindung sind typischerweise nicht oder nur wenig flüchtige organische Stoffe, die keine kovalente Bindung mit PVC eingehen und dessen Glasübergangstemperatur herabsetzen. Durch Mischen mit dem Weichmacher wird das an sich harte und spröde PVC in einen weichen, zähen Werkstoff überführt, der dem Fachmann unter dem Begriff weichgemachtes PVC oder Weich-PVC bekannt ist. Das weichgemachte PVC liegt üblicherweise bei Raumtemperatur als flexibler Feststoff vor. Geeignete Weichmacher sind dem Fachmann bekannt. Typische Weichmacher sind beispielsweise Ester der Phthalsäure, Terephthalsäure, Sebazinsäure, Trimellitsäure, Alkansulfonsäure, Zitronensäure oder Benzoesäure mit Alkoholen. In weichgemachtem PVC sind signifikante Mengen solcher Weichmacher enthalten, welche üblicherweise im Bereich von 10 Gew.-% bis zu über 50 Gew.-% der Gesamtmasse des weichgemachten PVC liegen. Der Weichmacher kann unter ungünstigen Gebrauchsbedingungen oberflächlich migrieren oder in benachbarte Materialien übergehen. Bei der Verwendung von weichgemachtem PVC besteht daher die Gefahr einer Kontamination von Mensch und Umwelt mit dem Weichmacher. Vor dem Hintergrund dieser Problematik wird in letzter Zeit vermehrt von den verwendeten Weichmachern gefordert, dass sie für den Menschen harmlos und nicht bioakkumulierend sind.

### Kurzkettige Phthalate als Weichmacher

Nach der in der Europäischen Union gültigen REACH Richtlinie befinden sich die Weichmacher Di(2-ethylhexyl)phthalat, Dibutylphthalat und Benzylbutylphthalat auf der SVHC-Liste (substances of very high concern). Weiterhin dürfen die Weichmacher Diisononylphthalat, Diisodecylphthalat und Di-n-octylphthalat nicht mehr in Spielzeug oder Babyartikeln, die von Kindern in Mund genommen können, verwendet werden. Angesichts dieser Einschränkungen, die für manche Konsumenten als unübersichtlich und verunsichernd erscheinen können, gehen viele Hersteller dazu über, bei der Herstellung von weichgemachtem PVC generell auf alle phthalathaltigen Weichmacher und deren Isomere zu verzichten. Daher besteht ein Bedarf an phthalatfreien Weichmachern, die hinsichtlich Verarbeitbarkeit und Nutzeigenschaften das Leistungsniveau von phthalatbasierten Weichmachern erreichen.

### Phthalatfreie Weichmacher

Als phthalatfreie Weichmacher werden im Zusammenhang mit der vorliegenden Erfindung Weichmacher bezeichnet, die - bezogen auf den Gehalt an Weichmacher - weniger als 1,0 Gew.-%, bevorzugt weniger als 0,5 Gew.-%, besonders bevorzugt weniger als 0,1 Gew.-% und besonders bevorzugt gar keine Phthalsäuredialkylester enthalten.

### Phthalatfreier Haftvermittler-Zusammensetzungen

Der Verzicht auf phthalathaltige Weichmacher wird nun auch von weichmacherhaltigen Haftvermittler-Zusammensetzungen gefordert, insbesondere für sensible Anwendungen mit z.B. Hautkontakt. Es besteht daher ein großer Bedarf an Haftvermittler-Zusammensetzungen, die keine Phthalate enthalten, aber dennoch die guten Haftungseigenschaften phthalathaltiger Haftvermittler-Zusammensetzungen aus dem Stand der Technik aufweisen. Als phthalatfreie Haftvermittler-Zusammensetzungen werden im Zusammenhang mit der vorliegenden Erfindung Haftvermittler-Zusammensetzungen bezeichnet, die - bezogen auf ihre Gesamtmasse - weniger als 1,0 Gew.-%, bevorzugt weniger als 0,5 Gew.-%, besonders bevorzugt weniger als 0,1 Gew.-% und besonders bevorzugt gar keine Phthalsäuredialkylester enthalten.

Weiterhin wird gefordert, dass die Haftvermittler-Zusammensetzungen klar, farblos und frei von Feststoffen oder Niederschlägen sind, keine sehr flüchtigen Bestandteile, d.h. organische Verbindungen mit einem Siedepunkt von 0°C bis 100°C enthalten und für eine gute Verarbeitbarkeit eine Viskosität bei 23°C von kleiner als 30.000 mPas, bevorzugt kleiner 10.000 mPas und besonders bevorzugt kleiner 5.000 mPas aufweisen. Der Restgehalt an monomeren Diisocyanaten soll weniger als 0,8 Gew.-%, bevorzugt weniger als 0,6 und besonders bevorzugt nicht mehr als 0,5 Gew.-% betragen. Eine Kombination aller dieser Produkteigenschaften ist im Stand der Technik bisher nicht beschrieben.

So sind die in WO 2005 70984 A1 beschriebenen Haftvermittler-Zusammensetzungen auf Basis von Diisononylphthalat für sensible Anwendungen weniger geeignet. In DE 2551634 A1 und EP 1378529 A1 wird postuliert, dass als Haftvermittler geeignete isocyanatgruppenhaltige Isocyanurate auf Basis von TDI sich in beliebigen Lösungsmitteln, darunter auch in phthalatfreien Weichmachern, herstellen lassen. Dies entspricht jedoch nicht der Realität. Versuche der Erfinder zeigten, dass keineswegs beliebige phthalatfreie Weichmacher zu Haftvermittler-Zusammensetzungen führen, die alle beschriebenen Anforderungen erfüllen. Dies gilt auch für die in DE 102007034977 beschriebenen Weichmacher auf Basis von Alkansulfonsäureestern des Phenols (ASE), die unter dem Handelsnamen Mesamoll^{®} vertrieben werden. DE 3041732 A1 beschreibt als Haftvermittler geeignete Lösungen von isocyanatgruppenhaltigen Isocyanuraten, die allerdings aus MDI hergestellt werden. Diese Lösungen sind aus den oben genannten Gründen ungeeignet.

### Aufgabe der Erfindung

Aufgabe der vorliegenden Erfindung war es daher, als Haftvermittler geeignete Zusammensetzungen von isocyanatgruppenhaltigen Isocyanuraten zur Verfügung zu stellen, die zwar phthalatfreie Weichmacher enthalten, aber in ihren mechanischen Eigenschaften, wie z. B. Haftfestigkeiten, das Niveau der phthalathaltigen Haftvermittler-Zusammensetzungen aus WO2005/70984 A1 erreichen. Die isocyanatgruppenhaltigen Isocyanurate sollen auf großtechnisch verfügbaren Isomerenmischungen des TDI basieren. Die Zusammensetzungen sollen klar und nahezu farblos sein, ihre Viskosität soll bei 23°C < 30.000 mPas, bevorzugt kleiner 10.000 mPas und besonders bevorzugt kleiner 5.000 mPas und der Gehalt an freiem TDI (alle Isomere) soll weniger als 0,8 Gew.-%, bevorzugt weniger als 0,6 Gew.-% und besonders bevorzugt nicht mehr als 0,5 Gew.-% betragen. Die Flüchtigkeit des verwendeten Weichmachers sollte nicht höher als die des iso-Nonylbenzoats sein.

### Flüchtigkeit des Weichmachers

Die Flüchtigkeit des verwendeten Weichmachers sollte nicht ungünstiger sein, als die des iso-Nonylbenzoates (INB). INB ist als Träger des Haftvermittler Wirkstoff Isocyanurat weltweit bezüglich der Flüchtigkeit akzeptiert. Eine höhere Flüchtigkeit ist allerdings unerwünscht. Die Flüchtigkeit einer Substanz wird dabei mittel thermogravimetrischer Analyse (TGA) bestimmt.

### Lösung der Aufgabe

Lösung der Aufgabe und somit Gegenstand der vorliegenden Erfindung sind Zusammensetzungen, enthaltend:
a) isocyanatgruppenhaltige Isocyanurate und
b) Benzylalkyladipat,
wobei das Gewichtsverhältnis von a) zu b) im Bereich von 1:1 bis 1:8, bevorzugt von 1:1,2 bis 1:4 und besonders bevorzugt von 1:1,5 bis 1:2,5 liegt.

In einer bevorzugten Ausführungsform trägt das Benzylalkyladipat als Alkylgruppe eine verzweigte oder unverzweigte C₆ bis C₁₆-Alkylgruppe, vorzugsweise eine unverzweigte oder verzweigte Octylgruppe und meist bevorzugt eine iso-Octylgruppe.

Ganz besonders bevorzugt ist die Verwendung von Benzyloctyladipat als Komponente b).

In einer bevorzugten Ausführungsform der Erfindung enthalten die Zusammensetzungen 20 bis 35 Gew. % isocyanatgruppenhaltige Isocyanurate und 80 bis 65 Gew.-% Benzyloctyladipat.

In einer weiteren bevorzugten Ausführungsform enthalten die Zusammensetzungen bezogen auf die Gesamtmasse der Zusammensetzung bis zu 50 Gew.%, vorzugsweise 0,1 bis 40 Gew.-% eines Verdünnungsmittels. Bevorzugt handelt es sich dabei um Verdünnungsmittel aus der Gruppe enthaltend Alkylacetat, vorzugsweise Butylacetat, Ethylacetat, Propylacetat, N-Alkylpyrrolidon, N-Octylpyrrolidon, N- Decylpyrrolidon, DMF, Aceton, Alkylbenzoate, bevorzugt Benzylbenzoat, Paraffine, Weißöle, und aromatenarme Aliphate sowie Mischungen dieser Stoffe.

Vorteilhaft können als Komponente a) isocyanatgruppenhaltige Isocyanurate eingesetzt werden, welche erhältlich sind durch Trimerisation eines Gemisches aus isomeren Diisocyanatotoluolen enthaltend 2,4-Diisocyanatotoluol und 2,6-Diisocyanatotoluol.

Bevorzugt werden als Komponente a) isocyanatgruppenhaltige Isocyanurate eingesetzt, welche erhältlich sind durch Trimerisation eines Gemisches aus 65 bis 95 Gew.% 2,4-Diisocyanatotoluol und 5 bis 35 Gew.-% 2,6-Diisocyanatotoluol, wobei die Gewichtsprozente jeweils bezogen sind auf die Gesamtmenge an Diisocyanatotoluolen.

Die Herstellung der Komponente a) kann durch Trimerisation der Diisocyanatmischungen nach bekannten Verfahren erfolgen, wie sie beispielsweise in WO 2005 70984 A1 beschrieben sind.

Die Trimerisation wird bevorzugt in Gegenwart der Weichmacherkomponente b) durchgeführt.

Die vorliegende Erfindung betrifft auch ein Verfahren zur Herstellung der erfindungsgemäßen Zusammensetzungen, bei dem Diisocyanate in Gegenwart des Benzylalkyladipats b) zu den isocyanatgruppenhaltige Isocyanuraten a) trimerisiert werden.

Die Trimerisationsreaktion erfolgt typischerweise im Temperaturbereich von 40 bis 140°C, vorzugsweise 40 bis 80°C. Die Trimerisation wird abgebrochen, wenn der Gehalt an monomeren Diisocyanaten in der Reaktionsmischung 0,8 Gew.-%, bevorzugt 0,6 Gew.-% und besonders bevorzugt 0,5 Gew.-% oder weniger beträgt.

Solch ein Abbruch kann erzielt werden durch vollständige oder teilweise Deaktivierung des Katalysators beispielsweise durch thermische Zersetzung des Katalysators oder Zugabe eines Reaktionsstoppers. Als Reaktionsstopper können Protonensäuren, Säurechloride oder methylierenden Verbindungen eingesetzt. Besonders bevorzugt werden Alkylphosphate, insbesondere Dibutylphosphat oder Toluolsulfonsäuremethylester eingesetzt. Typischerweise wird bei verwendung eines Reaktionsstoppers dieser in einer Menge von 0,02 bis 4 Gew.-%, bevorzugt zu 0,1 bis 2 Gew.-%, besonders bevorzugt zu 0,2 bis 1 Gew.-% bezogen auf die Gesamtmenge an eingesetztem Diisocyanaten verwendet. Das Produkt enthält dann typischerweise 3 bis 7 Gew.-% , vorzugsweise 4,5 bis 6 % Isocyanatgruppen.

In einer bevorzugten Ausführungsform werden als Diisocyanate beim erfindungsgemäßen Verfahren Diisocyantotoluole, besonders bevorzugt großtechnisch verfügbare Gemische bestehend im Wesentlichen aus 2,4-TDI und 2,6-TDI verwendet. Die Gemische sind Mischungen isomerer Diisocyanatotoluole enthaltend 65 bis 95 Gew.-% 2,4-Diisocyanatotoluol und 5 bis 35 Gew.-% 2,6-Diisocyanatotoluol und werden unter Katalyse hergestellt. Besonders bevorzugt enthalten die TDI-Isomerenmischungen 75 bis 85 Gew.-% 2,4-TDI im Gemisch mit 15 bis 25 Gew.-% 2,6-TDI. Ein Beispiel für diese besonders bevorzugt zu verwendenden TDI-Isomerenmischungen ist das kommerziell von der Covestro AG erhältliche Produkt Desmodur^{®} T80.

Zur Herstellung der Komponente a) kann ein Katalysator zur Initiierung und Beschleunigung der Trimerisationsreaktion verwendet werden, der auch bei höheren Temperaturen zu einem selektiven Einbau von TDI führt. Solche Katalysatoren weisen an Aromaten gebundene N,N-Dialkylaminomethylgruppen und phenolische OH-Gruppen auf (Alkyl: C1-C3-Alkylkette und/oder Alkylenkette mit 1 bis 18 Kohlenstoffatomen, die gegebenenfalls durch Sauerstoff oder Schwefel getrennt sind).

Diese Gruppen können auf mehrere Moleküle verteilt, oder an einem oder mehreren Aromatenringen positioniert sein. Vorzugweise werden Verbindungen als Katalysatorsysteme eingesetzt, die sowohl Hydroxyl- als auch Aminomethylgruppen in einem Molekül enthalten.

Besonders bevorzugt werden Systeme eingesetzt, bei denen C1-C3-Dialkylamino-methylgruppen in ortho-Stellung zu aromatischen Hydroxylgruppen positioniert sind.

Die Synthese von als Katalysatoren geeigneten Mannich-Basen ist beispielsweise in DE 25 51 634 A1 und WO 2005 70984 A1 beschrieben. Bevorzugt einzusetzende Mannich-Basen sind solche auf Basis von Phenol, p-Isononylphenol oder Bisphenol A, die durch Umsetzung mit Dimethylamin und Formaldehyd z.B. nach der DE-A 2 452 531 oder Synth.Commun. (1986), 16, 1401-9 erhalten werden. Insbesondere bevorzugt sind Mannich-Basen auf Basis Phenol oder Bisphenol A.

Die einzusetzenden Katalysatoren werden als Reinsubstanz oder gelöst, bevorzugt in mehreren kleinen Portionen oder kontinuierlich eingesetzt.

Die erfindungsgemäßen Zusammensetzungen sind klare, farblose oder fast farblose Flüssigkeiten mit überraschender Lagerstabilität, die auch nach mehrwöchiger Lagerung weder zur Verfärbung, Kristallisation noch zur Bildung von Ausfällungen oder Phasentrennung neigen. Außerdem zeichnen sie sich vor und nach Lagerung durch einen äußerst geringen Gehalt an freiem TDI (d.h. monomeren Diisocyantotoluolen) aus, was wegen des relativ niedrigen Siedepunktes dieses toxikologisch bedenklichen Diisocyanats ein besonderer Vorteil der erfindungsgemäßen Zusammensetzungen ist.

Die unten angeführten Vergleichsbeispiele 1 bis 6 zeigen somit nicht nur, dass die dieser Erfindung zugrunde liegende Aufgabe nicht mit beliebigen phthalatfreien Weichmachern zu lösen ist, sondern belegen zudem dass durch die vorliegende Erfindung auch ein Verfahren bereitgestellt wird, mit dem sich in vorteilhafter Weise die Kombination von Weichmacher und isocyanatgruppenhaltigen Isocyanuraten herstellen lässt, welche als Haftvermittler-Zusammensetzungen die geforderten Eigenschaften liefert.

### Verwendung der erfindungsgemäßen Zusammensetzungen

Die erfindungsgemäßen Zusammensetzungen eignen sich als Haftvermittler, besonders für Beschichtungen aus weichgemachtem PVC bzw. als haftvermittelnde Zusätze für PVC-Plastisole. Unter PVC-Plastisolen versteht der Fachmann flüssige Dispersionen aus PVC in einem Weichmacher, welche z.B. durch Erwärmen auf eine höhere Temperatur gelieren und somit zur Herstellung von weichgemachtem PVC verwendet werden können. Besonders vorteilhaft können die erfindungsgemäßen Zusammensetzungen verwendet werden als Haftvermittler zwischen Substraten aus Synthesefasern mit gegenüber Isocyanat-gruppen reaktionsfähigen Gruppen, wie z. B. Polyamid- oder Polyesterfasern, und PVC-Plastisolen bzw. Weich-PVC-Schmelzen. Selbstverständlich kann mit den erfindungsgemäßen Lösungen auch die Haftung von weichgemachtem PVC an flächigen Substraten, wie beispielsweise an Folien, verbessert werden.

Die erfindungsgemäßen Zusammensetzungen eignen sich daher insbesondere als Haftvermittler für Beschichtungsmittel auf Basis von weichgemachtem PVC. Der Begriff "Beschichtungsmittel auf Basis von weichgemachtem PVC" umfasst im Sinne der vorliegenden Erfindung sowohl Beschichtungsmittel enthaltend Plastisole als auch Beschichtungsmittel die in Form von Zusammensetzungen enthaltend geschmolzenen Weich-PVC auf das Substrat aufgebracht werden, wobei erstere bevorzugt sind.

Als zu beschichtende Substrate eignen sich insbesondere Textilien wie Gewebe aus Natur-, Kunst-, oder Glasfasern. Als Kunstfasern sind Polyamid und Polyesterfasern besonders geeignet. Weiterhin ist auch Leder als Substrat verwendbar.

Die erfindungsgemäßen Zusammensetzungen können verwendet werden zur Herstellung von Substraten mit Beschichtungen enthaltend oder bestehend aus weichgemachtem PVC. Sofern die Beschichtung nicht aus weichgemachtem PVC besteht, enthält sie typischerweise mindestens 50 Gew.-%, vorzugsweise mindestens 75 Gew.-% und besonders bevorzugt von 90 Gew.-% bis 99 Gew.-% desselben, neben den für den Fachmann üblichen Zuschlagstoffen für PVC Beschichtungen. Dabei können beispielsweise die erfindungsgemäßen Zusammensetzungen auf die zu beschichtenden Substrate gedruckt, gerakelt, gerastert oder gesprüht oder durch Tauchen aufgebracht werden. Je nach herzustellendem Artikel werden auf die so vorbehandelten Substratoberflächen eine oder mehrere haftvermittlerfreie PVC-Schichten, z. B. als Plastisole oder durch Extrusions- oder Schmelzwalzenbeschichtung oder durch Laminierung, aufgebracht. Besonders bevorzugt können die erfindungsgemäßen Zusammensetzungen auch einem PVC-Plastisol vor dessen Applikation zugesetzt werden.

Die erfindungsgemäßen Zusammensetzungen werden üblicherweise in solchen Mengen eingesetzt, dass, bezogen auf weichmacherfreies PVC der Beschichtungsmasse, 0,5 bis 40 Gew.-%, vorzugsweise 2 bis 15 Gew.-% isocyanatgruppenhaltige Isocyanurate vorliegen. Die erfindungsgemäßen Lösungen können jedoch auch in beliebigen anderen, dem jeweiligen Anwendungsgebiet angepassten Mengen eingesetzt werden.

Die Herstellung der fertigen Schichten, also die Reaktion der Isocyanatgruppen des Haftvermittlers mit dem Substrat und die Gelierung der PVC-Schicht, erfolgt unabhängig von der Art des Auftrags in üblicher Weise bei höheren Temperaturen, wobei je nach Zusammensetzung der PVC-Schichten Temperaturen zwischen 110 und 210°C angewandt werden.

Ein weiterer Gegenstand der vorliegenden Erfindung sind Beschichtungen und beschichtete Substrate für Textilien oder Gewebe, die unter Verwendung der oben beschriebenen Haftvermittler-Zusammensetzungen erhältlich sind. Die erfindungsgemäßen Zusammensetzungen eignen sich als Haftvermittler für Beschichtungsmittel auf Basis von weichgemachtem PVC, und somit zur Herstellung von Beschichtungen enthaltend oder bestehend aus weichgemachtem PVC, d.h. insbesondere zur Herstellung von Planen, Billboards, Traglufthallen und anderen textilen Bauten, flexiblen Behältern, Zeltdächern, Markisen, Schutzbekleidungen, Förderbändern, Flockteppichen oder Schaumkunstleder.

Besonders gut geeignet sind die erfindungsgemäßen Zusammensetzungen als haftvermittelnde Zusatzmittel bei der Beschichtung von Substraten mit gegenüber Isocyanatgruppen reaktionsfähigen Gruppen, insbesondere bei der Beschichtung von Garnen, Matten und Geweben aus Polyester- oder Polyamidfasern.

### Beispiel und Vergleichsbeispiele

Sofern nicht anders vermerkt, beziehen sich alle Teile und Prozentangaben auf das Gewicht.

### Bestimmung der Kenndaten

Als Kenndaten der Produkte wurden die Viskosität bei 23°C (Rotationsviskosimeter VT550 der Fa. Haake GmbH, Karlsruhe) sowie der Gehalt an freiem TDI (Gaschromatographie, Hewlett Packard 5890 nach DIN ISO 55956) bestimmt. Die Bestimmung des Isocyanatgehaltes erfolgte nach EN ISO 11909. Die Erstellung der TGA Verläufe erfolgte mittels Mettler Toledo TGA/DSC 3+ SF/1100/189, T = RT bis 400°C, 10°C/min, N₂.

### Ausgangsstoffe für Beispiel und Vergleichsbeispiele

Desmodur^{®} T80: TDI-Isomerengemisch aus 80 Gew.-% 2,4-TDI und 20 Gew.-% 2,6-TDI, Covestro AG.

Vestinol^{®} 9 DINP: Diisononylphthalat, Evonik.

Adimoll^{®} DB: Dibutyladipat, Lanxess Deutschland GmbH.

Adimoll^{®} DO: Dioctyladipat, Lanxess Deutschland GmbH.

Adimoll^{®} BO: Benzyloctyladipat, Lanxess Deutschland GmbH.

Benzoflex^{®} 2088: Mischung aus Diethylenglycoldibenzoat, Triethylenglycoldibenzoat und Dipropylenglycoldibenzoat, Velsicol Chemical Corp.

Mesamoll^{®} II: Alkansulfonsäurephenolester, Lanxess Deutschland GmbH.

Katalysator: DABCO TMR 30 (2,4,6-Tris(dimethylaminoethyl)phenol)

Reaktionsstopper: Dibutylphosphat

### TGA:

**Tabelle 1: Bestimmung der Flüchtigkeit verschiedener Adipate im Vergleich zu den Weichmachern INB und DINP mittels TGA**

| Weichmacher | Kürzel | ca. Rückstand bei 180°C | ca. Rückstand bei 200°C |
|---|---|---|---|
| Dibutyladipat | DBA | 31 | 1 |
| Isononylbenzoat | INB | 88 | 70 |
| Benzyloctyladipat | BOA | 96 | 85 |
| Dioctyladipat | DOA | 98 | 94 |
| Diisononyladipat | DINA | 100 | 98 |
| Diisononylphthalat | DINP | 100 | 100 |

Aus Tabelle 1 ist ersichtlich, dass Dibutyladipat (DBA) bei den üblichen Verarbeitungstemperaturen für PVC Plastisole weitestgehend schon verdampft ist. Dies wird ist aus Umwelt- und Arbeitsschutzgründen nicht akzeptiert. Weiterhin kann es zu Blasenbildung in der PVC Schicht kommen, was ebenfalls äußerst unwillkommen ist.

### Vergleichsbeispiel 1 (nicht erfindungsgemäß) DINP

180 Gewichtsteile Desmodur^{®} T80 wurden bei 55°C in 378 Gewichtsteilen Vestinol^{®} 9 DINP mit 1,6 Gewichtsteilen Katalysator trimerisiert. Nach 72 Stunden wurde die Reaktion durch Zugabe von 2,6 Gewichtsteilen Reaktionsstopper unterbrochen und bei 60 bis 70°C drei Stunden nachgerührt. Es wurde eine klare farblose Lösung mit einem Isocyanatgehalt von 5,53 Gew.-%, einer Viskosität bei 23°C von 41.400 mPas und einem Gehalt an freiem TDI von 0,14 Gew.-% erhalten.

### Vergleichsbeispiel 2 (nicht erfindungsgemäß) DBA

Mittels TGA wurde zuvor die Flüchtigkeit von Dibutyladipat bestimmt (siehe Tabelle 1).

Es zeigte sich hierbei, dass das Material bei den üblichen PVC - Verarbeitungstemperaturen von 180 - 210°C nahezu komplett verdampft. Dies kann zu Blasenbildung in der PVC Schicht führen und ist daher äußerst unwillkommen. Auf eine weitere Ausprüfung wurde daher verzichtet.

### Vergleichsbeispiel 3 (nicht erfindungsgemäß) Ethylen- und Propylenglycoldibenzoat

180 Gewichtsteile Desmodur^{®} T80 wurden bei 50°C in 415 Gewichtsteilen in Benzoflex^{®} 2088 mit 0,7 Gewichtsteilen Katalysator trimerisiert. Nach 84 Stunden wurde die Reaktion durch Zugabe von 1,7 Gewichtsteilen Reaktionsstopper unterbrochen und bei 60 bis 70°C drei Stunden nachgerührt. Es wurde eine klare farblose Lösung mit einem Isocyanatgehalt von 4,8 Gew.-%, einer Viskosität bei 23°C von > 200.000 mPas und einem Gehalt an freiem TDI von 1,09 Gew.-% erhalten.

### Vergleichsbeispiel 4 (nicht erfindungsgemäß) Mesamoll^{®} II 2,9 T Kat

180 Gewichtsteile Desmodur^{®} T80 wurden bei 55°C in 504 Gewichtsteilen Mesamoll^{®} II mit 2,9 Gewichtsteilen Katalysator trimerisiert. Nach 72 Stunden wurde die Reaktion durch Zugabe von 4,7 Gewichtsteilen Reaktionsstopper unterbrochen und bei 60 bis 70°C drei Stunden nachgerührt. Es wurde eine klare gelbliche Lösung mit einem Isocyanatgehalt von 4,8 Gew.-%, einer Viskosität bei 23°C von 11.600 mPas und einem Gehalt an freiem TDI von 0,25 Gew.-% erhalten.

### Vergleichsbeispiel 5 (nicht erfindungsgemäß) Mesamoll^{®} II 1,5 T Kat

180 Gewichtsteile Desmodur^{®} T80 wurden bei 55°C in 378 Gewichtsteilen Mesamoll^{®} II mit 1,5 Gewichtsteilen Katalysator trimerisiert. Nach 72 Stunden wurde die Reaktion durch Zugabe von 2,6 Gewichtsteilen Reaktionsstopper unterbrochen und bei 60 bis 70°C drei Stunden nachgerührt. Es wurde eine klare gelbliche Lösung mit einem Isocyanatgehalt von 5,31 Gew.-%, einer Viskosität bei 23°C von > 300.000 mPas und einem Gehalt an freiem TDI von 0,15 Gew.-% erhalten.

### Vergleichsbeispiel 6 (nicht erfindungsgemäß) Dioctyladipat

180 Gewichtsteile Desmodur^{®} T80 wurden bei 70°C in 534 Gewichtsteilen Adimoll DO mit 2,5 Gewichtsteilen Katalysator trimerisiert. Nach 5 Stunden wurde die Reaktion durch Zugabe von 5 Gewichtsteilen Reaktionsstopper unterbrochen und bei 60 bis 70°C 1 Stunde nachgerührt. Es wurde keine klare Lösung erhalten. Nach kurzer Zeit bildete sich ein Niederschlag. Das Produkt ist so nicht verwendbar und wurde nicht weiter analysiert.

Vergleichsbeispiel 1 entspricht Beispiel 2 aus EP 1 711 546 A1 und dient dazu, die Eigenschaften der erfindungsgemäßen Haftvermittler-Zusammensetzungen mit dem Stand der Technik vergleichen zu können. Vergleichsbeispiel 4 und 5 zeigen, dass die Erhöhung der Katalysatormenge nicht automatisch zu einem erfindungsgemäßen Produkt führt.

Wie die nicht erfindungsgemäßen Vergleichsbeispiele 1 bis 6 weiterhin zeigen, hat die Auswahl des Weichmachers einen entscheidenden Einfluss auf das Ergebnis der Trimerisation. So kann die gewünschte Eigenschaftskombination durch Verwendung der im Stand der Technik beschriebenen phthalatfreien Weichmacher nicht bzw. nur erreicht werden, wenn die TDI-Trimer-Konzentration ca. 27 Gew.-% nicht überschreitet. Die Haftvermittler können entweder aufgrund ihrer hohen Viskosität nicht mehr verarbeitet werden bzw. ergeben wegen ihrer zu geringen TDI-Trimer-Konzentration zu geringe Haftfestigkeiten.

### Beispiel 1 (erfindungsgemäß) Benzyloctyladipat ( = -K93 )

180 Gewichtsteile Desmodur^{®} T80 wurden bei 70°C in 414 Gewichtsteilen Adimoll^{®} BO mit 1,6 Gewichtsteilen Katalysator trimerisiert. Nach 12 Stunden wurde die Reaktion durch Zugabe von 3,2 Gewichtsteilen Reaktionsstopper unterbrochen und bei 60 bis 70°C 1 Stunde nachgerührt. Es wurde eine klare farblose Lösung mit einem Isocyanatgehalt von 5,3 Gew.-%, einer Viskosität bei 23°C von 1.924 mPas und einem Gehalt an freiem TDI von 0,5 Gew.-% erhalten.

### Anwendungstechnische Prüfung und Prüfergebnisse:

In einem praxisnahen Prüfsystem wurde Polyestergewebe mit einer PVC-Plastisol/Haftvermittlerbeschichtung versehen. Die Haftfestigkeit dieser Beschichtung wurde anschließend an einem normierten Teststreifen bestimmt. Dazu wurden mit einem Rakel Polyestergewebe mit einem haftvermittlerhaltigen Haftstrich beschichtet. Diese Beschichtungen wurden in einem Thermoofen geliert und der weiteren Prüfung zugeführt. Bei der Prüfung der Haftfestigkeit wurden zwei Teststreifen (PVC Seite auf PVC Seite) übereinander gelegt, bei niedrigem Druck und 180°C verpresst und mittels einer Zugmaschine geprüft.

### Prüfeinrichtungen:

Waage: Genauigkeit min. 0,1 g
Rührer: hochtouriger Stabrührer
Mathisofen Labcoater der Firma Mathis AG Zürich
Zugmaschine Ametec LR5 K plus
Polyester-Gewebe: Polyester 1100 dtex L 9/9 Z 60 Standardgewebe
Für die Prüfung wurden ca. 40 × 25 cm große Gewebeproben verwendet.

### Zusammensetzung des PVC-Plastisols:

70 T Pasten PVC; Vestolit^{®} B 7021 Ultra; Vestolit GmbH; Marl
30 T Pasten PVC Vestolit ^{®} E 7031 ; Vestolit GmbH; Marl
33 T ASEP Weichmacher Mesamoll ^{®}; Lanxess Deutschland GmbH
33 T DINP Weichmacher Vestinol ^{®} 9; Evonik Oxeno GmbH, Marl
10 T Kreide Durcal^{®} 5; Omya GmbH; Köln
2,5 T Stabilisator Baerostab ^{®} UBZ 780 RF; Baerlocher GmbH; Berlin
1,5 T Titandioxid Kronos ^{®} 2220; Kronos Titan GmbH; Leverkusen
(T= Teile)

### Prüfkörper:

| | | |
|---|---|---|
| Haftstrich | ca. 140 g/m² | 140°C / 2 min |

Die Prüfkörper wurden nach der Beschichtung und dem vorgelieren bei 140°C für 2 min bei 180°C verpresst und verschweißt.
Dimension: 5 cm Breite × 25 cm Länge ) in Fadenschussrichtung
Prüfung mit Zugmaschine Ametec LR5 K plus
Zur Herstellung des PVC-Plastisols wurden die oben unter "Zusammensetzung des PVC-Plastisols" aufgeführten Ausgangsstoffe in einem Mischer der Firma Drais durch Rühren für 2,5 Stunden bei höchster Drehzahl, unter Wasserkühlung und im Vakuum vermischt.

### Zugprüfung:

Anhand dieser Proben wurden dann die Haftfestigkeiten mittels einer Zugmaschine, Typ Lloyd M 5 K, bestimmt. Die erhaltenen Haftfestigkeitswerte geben die Kraft in Newton an, die notwendig ist, um 5 cm der Beschichtung vom Trägergewebe abzulösen ( Schältest, tabellarisch dargestellt als Wirksamkeit in N/5cm ). Die in der Tabelle angegebenen Werte wurden durch Mittelung von mindestens drei Einzelmessungen erhalten.

### Vergleichsbeispiele und erfindungsgemäßes Beispiel

Wie die Messergebnisse des Beispiel 1 zeigen, liefert die erfindungsgemäßen phthalatfreie Zusammensetzung bei der Verwendung als Haftvermittler höhere Haftfestigkeitswerte, als sie mit der phthalathaltigen Zusammensetzung des Stands der Technik (Vergleichsbeispiel 1) erreicht werden. Die Haftvermittler aus den Vergleichsbeispielen 3, 5 und 6 eigneten sich nicht zur Weiterverarbeitung, da diese entweder zu hochviskos waren oder zu Niederschlägen führten. Die Zusammensetzungen gemäß Vergleichsbeispielen 4 und 5 wiesen zudem eine unvorteilhafte Gelbfärbung auf. Unerwartet war zudem, dass nur das erfindungsgemäße Benzyloctyladipat aus der Stoffklasse der Adipate unerwartet gute Wirksamkeit zeigt, die beiden anderen Produkte aus dieser Stoffklasse entweder Ausfällungen zeigten oder in der Flüchtigkeit viel zu hoch waren.

### Prüfergebnisse:

| **Beispiel** | **Flüchtigkeit des Weichmachers** | **Viskosität** | **Wirksamkeit Haftung N/5cm** |
|---|---|---|---|
| Vergleichsbeispiel 1 DINP | gering | 41.000 mPas | 156 |
| Vergleichsbeispiel 2 DBA | zu hoch | nicht geprüft | nicht geprüft |
| Vergleichsbeispiel 3 Benzoflex^{®} 2088 | ausreichend niedrig | > 200.000 mPas | nicht prüfbar |
| Vergleichsbeispiel 4 Mesamoll^{®} II 2,9 T Kat | gering | 11.600 mPas | 148 |
| Vergleichsbeispiel 5 Mesamoll^{®} II 1,5 T Kat | gering | > 300.000 mPas | nicht prüfbar |
| Vergleichsbeispiel 6 Dioctyladipat | ausreichend niedrig | Niederschlag | nicht geprüft |
| Beispiel 1 Benzyloctyladipat | ausreichend niedrig | 1.900 mPas | 206 |

## Patentansprüche

1. Zusammensetzungen enthaltend:
a) isocyanatgruppenhaltige Isocyanurate und
b) Benzylalkyladipat,
wobei das Gewichtsverhältnis von a) zu b) im Bereich von 1:1 bis 1:8, bevorzugt von 1:1,2 bis 1:4 und besonders bevorzugt von 1:1,5 bis 1:2,5, liegt.

2. Zusammensetzungen gemäß Anspruch 1, wobei das Benzylalkyladipat als Alkylgruppe eine verzweigte oder unverzweigte C₆ bis C₁₆-Alkylgruppe, vorzugsweise eine unverzweigte oder verzweigte Octylgruppe, meist bevorzugt eine iso-Octylgruppe aufweist.

3. Zusammensetzungen gemäß Anspruch 1 oder 2, wobei die isocyanatgruppenhaltige Isocyanurate erhältlich sind durch Trimerisation eines Gemisches aus isomeren Diisocyantotoluolen enthaltend 2,4-Diisocyanatotoluol und 2,6-Diisocyanatotoluol.

4. Zusammensetzungen gemäß einem oder mehreren der Ansprüche 1 bis 3, wobei die isocyanatgruppenhaltige Isocyanurate erhältlich sind durch Trimerisation eines Gemisches aus 65 bis 95 Gew.-% 2,4-Diisocyanatotoluol und 5 bis 35 Gew.-% 2,6-Diisocyanatotoluol, wobei die Gewichtsprozente jeweils bezogen sind auf die Gesamtmenge an Diisocyanatotoluolen.

5. Zusammensetzungen gemäß einem oder mehreren der Ansprüche 1 bis 4, enthaltend bezogen auf die Gesamtmasse der Zusammensetzung bis zu 50 Gew.% eines Verdünnungsmittels, vorzugsweise eines Verdünnungsmittels aus der Gruppe Alkylacetat, vorzugsweise Butylacetat, Ethylacetat, Propylacetat, N-Alkylpyrrolidon, N-Octylpyrrolidon, N- Decylpyrrolidon, DMF, Aceton, Alkylbenzoate, bevorzugt Benzylbenzoat, Paraffine, Weißöle, und aromatenarme Aliphate sowie Mischungen dieser Stoffe.

6. Verwendung der Zusammensetzungen gemäß einem oder mehreren der Ansprüche 1 bis 5 als Haftvermittler für Beschichtungsmittel auf Basis von weichgemachtem Polyvinylchlorid.

7. Verwendung gemäß Anspruch 6, wobei das Beschichtungsmittel mindestens ein PVC-Plastisol enthält.

8. Verwendung gemäß Anspruch 5 oder 6, für die Herstellung von Substraten mit Beschichtungen enthaltend oder bestehend aus weichgemachtem Polyvinylchlorid.

9. Verwendung gemäß Anspruch 8, wobei die beschichteten Substrate Planen, Billboards, Traglufthallen und anderen textilen Bauten, flexible Behälter, Zeltdächer, Markisen, Schutzbekleidung, Förderbänder, Flockteppiche oder Schaumkunstleder sind.

10. Verwendung gemäß einem oder mehreren der Ansprüche 8 und 9 wobei es sich bei den Substraten um Textilien, Gewebe oder Leder handelt.

11. Verwendung gemäß Anspruch 10, wobei es sich bei den Geweben um textile Polyester- oder Polyamidgewebe handelt.

12. Verfahren zur Herstellung der Zusammensetzungen gemäß einem oder mehreren der Ansprüche 1 bis 5, wobei Diisocyanate in Gegenwart des Benzylalkyladipats b) zu den isocyanatgruppenhaltige Isocyanuraten a) trimerisiert werden.

13. Verfahren gemäß Anspruch 12, worin die Trimerisation im Temperaturbereich von 40 bis 140°C erfolgt und abgebrochen wird wenn der Gehalt an den eingesetzten Diisocyanaten in der Reaktionsmischung 0,8 Gew-%, vorzugsweise 0,6-Gew.% und besonders bevorzugt 0,5 Gew.-% oder weniger beträgt.

14. Verfahren gemäß Anspruch 12 oder 13, worin als Diisocyanate ein Gemisch aus isomeren Diisocyanatotoluolen enthaltend 2,4-Diisocyanatotoluol und 2,6-Diisocyanatotoluol eingesetzt werden.

15. Beschichtungsmittel enthaltend eine Zusammensetzung gemäß einem oder mehreren der Ansprüche 1 bis 5 und mindestens ein PVC-Plastisol.

## Claims

1. Compositions comprising:
a) isocyanurates comprising isocyanate groups and
b) benzyl alkyl adipate,
where the ratio by weight of a) to b) is in the range of 1:1 to 1:8, preferably of 1:1.2 to 1:4 and particularly preferably of 1:1.5 to 1:2.5.

2. Compositions according to Claim 1, wherein the benzyl alkyl adipate has, as alkyl group, a branched or unbranched C₆ to C₁₆ alkyl group, preferably an unbranched or branched octyl group, most preferably an isooctyl group.

3. Compositions according to Claim 1 or 2, wherein the isocyanurates comprising isocyanate groups are obtainable by trimerization of a mixture of isomeric diisocyanatotoluenes comprising 2,4-diisocyanatotoluene and 2,6-diisocyanatotoluene.

4. Compositions according to one or more of Claims 1 to 3, wherein the isocyanurates comprising isocyanate groups are obtainable by trimerization of a mixture of 65% to 95% by weight of 2,4-diisocyanatotoluene and 5% to 35% by weight of 2,6-diisocyanatotoluene, where the percentages by weight are respectively based on the total quantity of diisocyanatotoluenes.

5. Compositions according to one or more of Claims 1 to 4, comprising, based on the total mass of the composition, up to 50% by weight of a diluent, preferably a diluent selected from the group of alkyl acetate, preferably butyl acetate, ethyl acetate, propyl acetate, N-alkylpyrrolidone, N-octylpyrrolidone, N-decylpyrrolidone, DMF, acetone, alkyl benzoates, with preference benzyl benzoate, paraffins, white oils, and low-aromatic-content aliphatics, and mixtures of these substances.

6. Use of the compositions according to one or more of Claims 1 to 5 as adhesion promoters for coating compositions based on plasticized polyvinyl chloride.

7. Use according to Claim 6, wherein the coating composition comprises at least one PVC plastisol.

8. Use according to Claim 5 or 6, for the production of substrates with coatings comprising or consisting of plasticized polyvinyl chloride.

9. Use according to Claim 8, wherein the coated substrates are tarpaulins, billboards, air-supported structures and other textile structures, flexible containers, tent roofs, awnings, protective apparel, conveyor belts, flock carpets or foamed synthetic leather.

10. Use according to one or more of Claims 8 and 9, wherein the substrates are textiles, woven fabrics or leather.

11. Use according to Claim 10, wherein the woven fabrics are textile polyester woven fabrics or textile polyamide woven fabrics.

12. Process for the production of the compositions according to one or more of Claims 1 to 5, wherein diisocyanates are trimerized in the presence of the benzyl alkyl adipate b) to give the isocyanurates a) comprising isocyanate groups.

13. Process according to Claim 12, in which the trimerization takes place in the temperature range of 40 to 140°C and is terminated when the content of the diisocyanates used in the reaction mixture is 0.8% by weight, preferably 0.6% by weight and particularly preferably 0.5% by weight or less.

14. Process according to Claim 12 or 13, in which diisocyanates used are a mixture of isomeric diisocyanatotoluenes, comprising 2,4-diisocyanatotoluene and 2,6-diisocyanatotoluene.

15. Coating composition comprising a composition according to one or more of Claims 1 to 5 and at least one PVC plastisol.

## Revendications

1. Compositions contenant :
a) des isocyanurates contenant des groupes isocyanate et
b) de l'adipate de benzylalkyle,
le rapport pondéral de a) à b) étant situé dans la plage de 1:1 à 1:8, de préférence de 1:1,2 à 1:4 et de manière particulièrement préférée de 1:1,5 à 1:2,5.

2. Compositions selon la revendication 1, l'adipate de benzylalkyle présentant en tant que groupe alkyle un groupe C₆-C₁₆-alkyle ramifié ou non ramifié, de préférence un groupe octyle non ramifié ou ramifié, le plus préférablement un groupe iso-octyle.

3. Compositions selon la revendication 1 ou 2, les isocyanurates contenant des groupes isocyanate pouvant être obtenus par trimérisation d'un mélange de diisocyanatotoluènes isomères contenant du 2,4-diisocyanatotoluène et du 2,6-diisocyanatotoluène.

4. Compositions selon l'une ou plusieurs des revendications 1 à 3, les isocyanurates contenant des groupes isocyanate pouvant être obtenus par trimérisation d'un mélange de 65 à 95% en poids de 2,4-diisocyanatotoluène et de 5 à 35% en poids de 2,6-diisocyanatotoluène, les pour cent en poids se rapportant à chaque fois à la quantité totale de diisocyanatotoluènes.

5. Compositions selon l'une ou plusieurs des revendications 1 à 4, contenant, par rapport à la masse totale de la composition, jusqu'à 50% en poids d'un diluant, de préférence d'un diluant du groupe acétate d'alkyle, de préférence acétate de butyle, acétate d'éthyle, acétate de propyle, N-alkylpyrrolidone, N-octylpyrrolidone, N-décylpyrrolidone, DMF, acétone, benzoates d'alkyle, de préférence benzoate de benzyle, paraffines, huiles blanches et aliphates pauvres en aromatiques ainsi que mélanges de ces substances.

6. Utilisation des compositions selon l'une ou plusieurs des revendications 1 à 5 en tant que promoteur d'adhérence pour des agents de revêtement à base de poly(chlorure de vinyle) plastifié.

7. Utilisation selon la revendication 6, l'agent de revêtement contenant au moins un plastisol de PVC.

8. Utilisation selon la revendication 5 ou 6 pour la fabrication de substrat présentant des revêtements contenant ou constitués de poly(chlorure de vinyle) plastifié.

9. Utilisation selon la revendication 8, les substrats revêtus étant des plans, des panneaux d'affichage publicitaire extérieurs, des structures gonflables et d'autres constructions textiles, des récipients souples, des toits en toile, des marquises, des vêtements de protection, des bandes transporteuses, des moquettes en velours ou du cuir synthétique en mousse.

10. Utilisation selon l'une ou plusieurs des revendications 8 et 9, les substrats étant des textiles, des tissus ou du cuir.

11. Utilisation selon la revendication 10, les tissus étant des tissus textiles de polyester ou de polyamide.

12. Procédé de préparation des compositions selon l'une ou plusieurs des revendications 1 à 5, des diisocyanates étant trimérisés en présence de l'adipate de benzylalkyle b) en isocyanurates contenant des groupes isocyanate a).

13. Procédé selon la revendication 12, la trimérisation ayant lieu dans la plage de température de 40 à 140°C et étant interrompue lorsque la teneur en diisocyanates utilisés dans le mélange réactionnel est de 0,8% en poids, de préférence de 0,6% en poids et de manière particulièrement préférée de 0,5% en poids ou moins.

14. Procédé selon la revendication 12 ou 13, dans lequel on utilise, comme diisocyanates, un mélange de diisocyanatotoluènes isomères contenant du 2,4-diisocyanatotoluène et du 2,6-diisocyanatotoluène.

15. Agent de revêtement contenant une composition selon l'une ou plusieurs des revendications 1 à 5 et au moins un plastisol de PVC.
